# EUROPEAN PATENT APPLICATION

(11) **EP 4 006 686 A1**
(43) Date of publication of application: **01.06.2022**
(21) Application number: 20461586.8
(22) Date of filing: 26.11.2020
(51) Int. Cl.: G05D 23/19, G05B 19/18, F24D 19/10

(54) **METHOD OF CONTROLLING HEAT TRANSFER PROCESS IN HEATING SUBSTATION, REGULATOR, COMPUTER PROGRAM PRODUCT AND HEATING SUBSTATION**

(71) Applicant: Ekoprojekt Spolka Z Ograniczona Odpowiedzialnoscia, 15-516 Bialystok (PL)
(72) Inventor: Chmielnicki, Witold, 04-840 Warszawa (PL); Chmielnicki, Eryk, 04-840 Warszawa (PL); Chmielnicki, Adrian, Clarendon Hills, IL 60514 (US)
(74) Representative: Bury, Marek

(57) **Abstract**

A method of control by means of a controller, of a heating substation including a heat exchanger (13, 14) supplied with thermal energy from an external heat source (8) by means of water as the heating medium in the primary circuit and the medium heated in the secondary circuit, in which the inflow of heat is regulated using an actuating device (2) changing the flow of the heating medium controlled by the control signal (19, 18), according to the invention, is characterized by the fact that in order to specify the values of the control signal, a neural (LV) regulator is used, including a system of two neural networks, the static control neural network and the dynamic control neural network.

An object of the invention is also a heating substation controller and a heating substation adapted to the implementation of the invention, as well as a computer program product.

## Description

Present invention concerns a method for controlling heat transfer process in heating substations, a controller, and a computer program product implementing the method for controlling a heating substation, and a heating substation.

In the state of the art, there are very few examples of using artificial intelligence and neural networks to control the heat process.

Such solutions are known from European patents EP 0 980 034 B1 and EP 2 802 954 B1. The object of the latter has also been granted a patent in the United States-US No. 9 921 590 B2. These documents disclose the use of neural networks to control heat supply for central heating in buildings. And the heat needed for heating is generated directly in the boiler room.

This type of solution is not suitable for controlling heat processes in heating substations supplied from external heat sources due to technological differences of such process. In the case of heating substations, typical requirements involve controlling the central heating and domestic hot water processes.

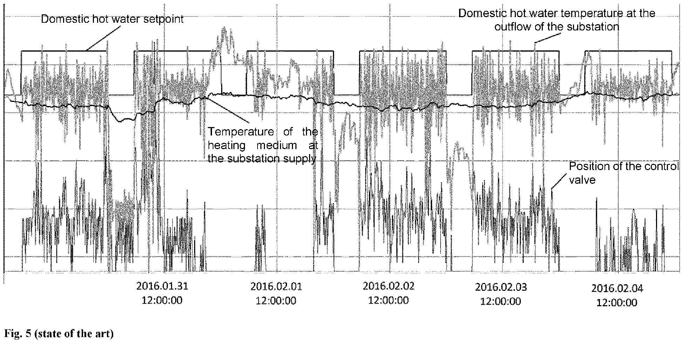

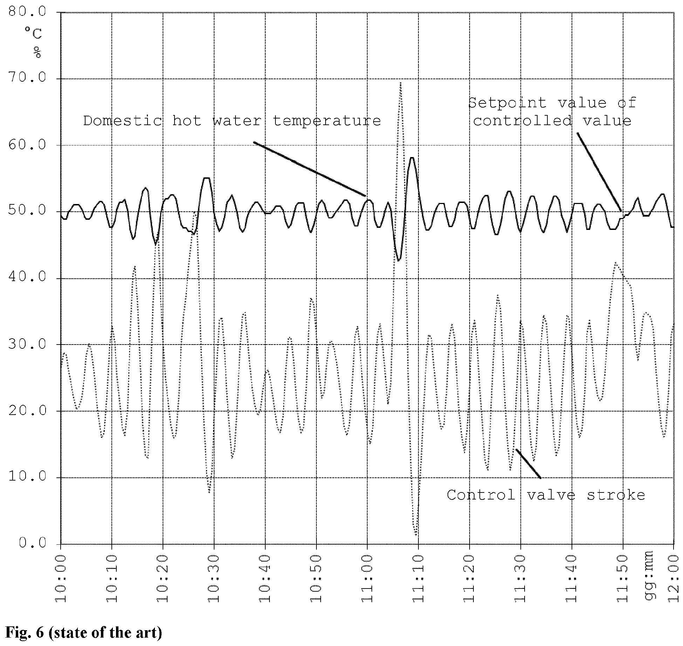

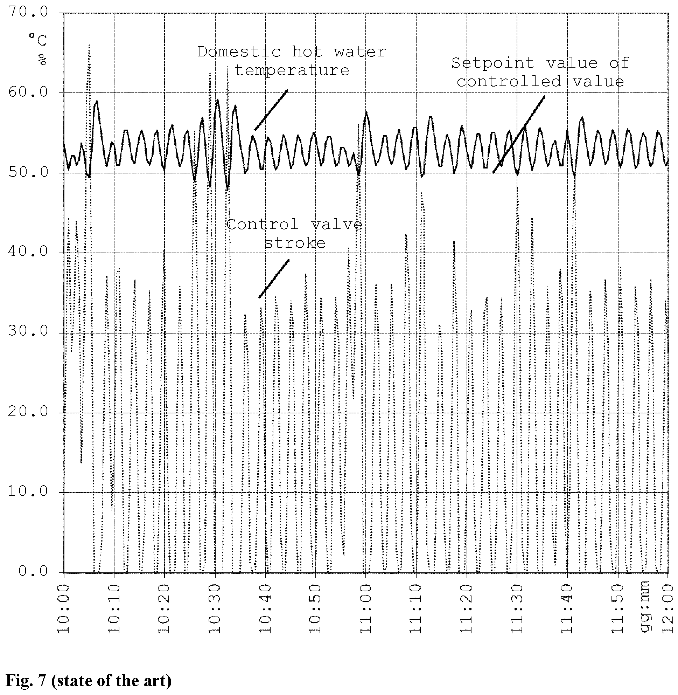

Control in such substations is carried out by changing the flow of the heating medium by means of an actuating device. The actuating device usually includes a control valve, and an actuator for opening and closing the control valve. The state of the actuating device is determined by the stroke of the actuating device's control valve. Appropriate thermal parameters of the process are obtained as a result of throttle control, by changing the flow of the heating medium. For this purpose, actuating devices are used where the positioner is a control valve and the actuator is an electric motor of appropriate design. The control signal generated by the controller has dynamic PID properties. Such solutions do not always provide high quality control, as one can see in Fig. 5, Fig. 6, and Fig. 7.

Multifunctional heating substations require completely different control algorithms than in the case of heat supply from a boiler room, which is intended exclusively for central heating. In addition, these processes have different properties from the point of view of automatic control needs. In the case of heating substations, there is a very large change in the value of process parameters along with a change in the operating point; these are unfavourable conditions for training neural networks.

The research of Curtis P.S. is known: Experimental Results from a Neural Network - Assisted PID Controller, ASHRAE Transactions 1996 part 2, volume 96(1); Curtis P.S.: Examples of Neural Networks Used for Building System Control and Energy Management, ASHRAE Transactions 1998 part 2, volume 104; Chmielnicki W.J., Chmielnicki E.A.: SOZE^{®} innowacyjny system wykorzystuj 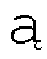 cy sztuczn 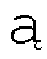 inteligencj 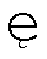 do sterowania i zarzadzania cieplem w budynkach [SOZE^{®} innovative system using artificial intelligence to control and manage heat in buildings], Cieplownictwo, Ogrzewnictwo, Wentylacja 50/8 (2019). The publication of Curtis P.S. concerns the application of neural networks to control individual heating and cooling processes in heating, ventilation, and air conditioning (HVAC) systems. These are only simulation models in which experimental results were used to develop and verify appropriate network structures that could be used to control actual systems. The work cited above includes simple processes in which usually only one parameter is controlled and concerns systems supplied from internal heat sources. Simulation tests were conducted for standard input forces, introducing typical disturbance at the input. The amplitude of the input forces was small. The general principle adopted in these solutions was to use an additional PID controller, which was connected in parallel to a neural network. In case the precision of control achieved by network control was lower than assumed, the system switched to PID control and the network training took place during this time. The next switch to neural network control took place at the moment when the expected precision of control was higher than the one obtained using the PID (proportional-integral-derivative) controller. In actual systems, it often happens that the PID controller does not provide stable operation. The presented test results concern simulation models for which minor disturbance from selected input values (such as setpoint, thermal power, air flow rate, etc.) was assumed. These models had properties similar to linear processes, as they did not deviate much from the operating point. The publication of Chmielnicki W.J., Chmielnicki E.A. describes possibilities of using neural networks to control heating processes. The preliminary results of long-lasting research works are presented.

Complete solutions using neural networks to control processes taking place in actual heating substations are not yet known. It should be stressed that they are much more complex than HVAC systems and require different solutions. Heating process control systems should meet a number of requirements that are not included in the previous works, in which attempts to use neural networks have been made. In these control structures, ongoing process optimization is required, which means that there is a need for effective non-linear control algorithms that take into account the limitations of the signals, i.e., these are advanced control algorithms. In industrial systems, such solutions are used under supervision. Heating substations in buildings are not under constant supervision, and the staff that deals with them does not have the appropriate operation qualifications. There are no technical solutions in the state of the art for fully maintenance-free operation.

The objective of the invention is to provide a significant improvement in the quality of control in a wide range of system operation. This includes indicators such as control deviation in static and dynamic states, control time at which the setpoint is reached, the disturbance attenuation rate, control overshoot, control precision, and much more. Furthermore, it is very important to ensure the stability of the control system. An important objective of the invention is also to reduce heat consumption for heating purposes while ensuring thermal comfort.

The method for controlling, by means of a controller, a heating substation including a heat exchanger supplied with thermal energy from an external heat source using water as a heating medium in the primary circuit and a heated medium in the secondary circuit, in which the heat inflow is controlled by means of an actuating device containing an actuator and a control valve connected to it, changing the heating medium flow rate, controlled by a control signal determined on the basis of signals from the sensors that represent the heating medium supply temperature and the heating medium return temperature and the heated medium temperature at the inflow into the substation and the heated medium supply temperature, the heated medium flow rate and the temperature setpoint value at the system supply and the position of the control valve of the actuating device according to the invention, is characterized by the fact that a neural controller comprising a system of two neural networks, a static control neural network and a dynamic control neural network, is used to determine the value of the control signal. The change in the value of the control signal of the actuating device is determined by means of the static control neural network in successive time steps, and if a change greater than a predefined value is found, a transient state is detected and the control signal change over time is determined using the dynamic control neural network. During control, signal values in the control system and control signal values are measured and recorded, and samples obtained after the detection of a transient state, recorded as long as this state is present, are used to train the dynamic control neural network.

Preferably, during control, signal values in the control system and control signal values are measured and recorded, and samples obtained in steady states are used to train the static control neural network.

Preferably, on the basis of the determined values of the control signal, the error detection of the static control neural network and the dynamic control neural network is carried out, including inactivity, erroneous direction of control, instability, and if an error is detected, control without the use of neural networks is carried out using the stored values of the control signal.

Preferably, the training of the static control neural network and/or dynamic control neural network is carried out until the predefined maximum number of training iterations is exceeded.

Preferably, the training of the static control neural network and/or dynamic control neural network is carried out until an error is obtained below the predefined training error value.

Preferably, the training of the static control neural network and/or the dynamic control neural network is carried out on a set of samples limited to a predefined maximum number of training samples and, when reached, one of the least divergent samples is removed from the set before the next one is added.

The controller adapted to generate the control signal of the actuating device of a heating substation, including the static control neural network and the dynamic control neural network, adapted to receive measurement signals from the heating medium supply temperature sensor, the heating medium return temperature sensor, the temperature sensor for the heated medium at the inflow to the substation, the heated medium supply temperature sensor, the heated medium flow rate sensor, the actuating device position sensor, and to take the temperature setpoint at the system supply according to the invention is adapted to the implementation of the method according to the invention.

The computer program product containing a sequence of instructions which, after being stored on a digital system constituting a digital system of a heating substation controller, adapted to receive and process measurement signals from the heating medium supply temperature sensor, the heating medium return temperature sensor, the heated medium supply temperature sensor, the temperature sensor for the heated medium at the inflow to the substation, the heated medium flow rate sensor, the actuating device control valve position sensor, and to take the temperature setpoint value at the system supply according to the invention is characterized by the fact that it causes the execution of the method according to the invention.

The heating substation including a heat exchanger supplied with thermal energy from an external heat source using water as a heating medium in the primary circuit and a heated medium in the secondary circuit, containing an actuating device that changes the heating medium flow rate through the heat exchanger, controlled by a control signal determined using the controller on the basis of signals from the sensors that represent the heating medium supply temperature and the heating medium return temperature and the heated medium inflow temperature and the heated medium supply temperature, the heated medium flow rate and the temperature setpoint value at the system supply and the position state of the actuating device in accordance with the invention, is characterized by the fact that the controller includes a neural controller according to the invention.

Preferably, the heating substation according to the invention includes a domestic hot water heat exchanger and a central heating heat exchanger supplied with heating medium via two independent actuating devices changing the flow rate of the heating medium through the heat exchangers, and the neural controller is adapted to the implementation of the method according to the invention for controlling the temperature set at the supply of the domestic hot water system and at the supply of the central heating system.

The object of the invention is presented as embodiments in the drawing where Fig. 1 presents a functional diagram of a dual-function heating substation known from the state of the art, Fig. 2 presents a functional diagram of a dual-function heating substation according to the embodiment of the invention, Fig. 3 presents a flowchart of the embodiment of the method according to the invention, Fig. 4 presents a table with control quality indicators obtained during the operation of the embodiment of a heating substation according to the invention, Fig. 5, 6, and 7 present the waveforms of control and controlled signals in a solution with PID-type controllers from the state of the art. Fig. 8 presents the flow of signal values in the process occurring in a heating substation equipped with a control system made according to the invention, Fig. 9 presents the control deviation in a system made according to the invention, Fig. 10 presents the measured and set changes in the opening of the control valve as a function of time in a system made according to the invention.

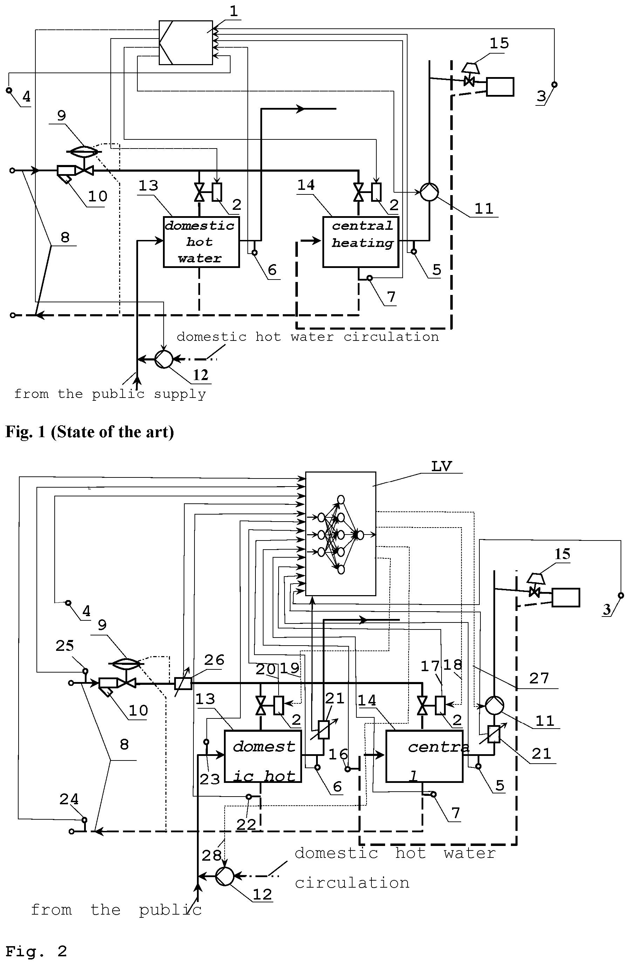

The functional diagram of a dual-function heating substation is shown in Fig. 2. At the output of the reulator **LV,** control signals **18, 19, 27, 28** are generated and sent to actuating devices **2** and pumps **11, 12.** In the heating substation with heat exchanger **14,** supplied from the heating network **8,** which consists an external heat source, temperature **5** of the heated medium, which is the temperature at the heating system supply, is controlled. It is set according to the purpose of the building and the requirements of the user. There is also a possibility of individual control in rooms using thermostatic controllers **15.** All signals present in a given process are introduced into the input of regulator **LV.** In the case of the heating substation with heat exchanger **14,** these are the parameters of the heating medium **25, 7,** the parameters of the heated medium **5, 16,** the setpoint value of the system supply temperature, determined on the basis of the control characteristics of a given system, which takes into account many different values, including external temperature **4** and internal temperature **3,** the flow rate of the heated medium **21,** and the stroke of the control valve **17,** i.e., the state of the actuating device's actuator.

For the domestic hot water substation with heat exchanger **13,** these are the parameters of the heating medium **25, 22,** the parameters of the heated medium **6** at the system supply **23,** at the inflow to the heat exchanger of tap water mixed with system water, the stroke **20** of the control valve of the actuating device, and the setpoint of the system supply temperature, determined according to the algorithm that depends on the purpose of the system. The differential pressure controller 9 with maximum flow limitation is installed at the substation connection. The filter **10** is mounted upstream. For the ongoing control of the substation and billing for the delivered heat, heat meters have been installed to measure a set of values covering the flow of the heated medium **21** and **26.**

The global temperature **24** of the heating medium at the outflow is also limited in the heating substation. It should not exceed the value specified in the bottom control chart. If it is exceeded, the control system reduces the amount of heat supplied to the heating substation, regardless of the current heating supply temperature.

The operation algorithm of the neural regulator **LV** is described in more detail below. It is a self-learning device that adapts to the needs of a given process. After switching on, the system is identified, and relevant process data is collected. At the beginning of the system operation, the controlled value usually differs from the setpoint. Once new equilibrium conditions are established, new samples are added to train neural networks. Results improve continuously over time. A change in the output value causes new samples to be added to the network training so that, consequently, the static control network and the dynamic control network become capable of predicting, over time, the behaviour of the system using a growing range of value changes.

Due to the limitation in the number of stored training samples, after a certain period of training, adding a sample requires removing one of the previous ones.

It was decided that the sample which is closest to the newly added one is removed, in terms of Cartesian distance, i.e., the square root of the sum of squares of the differences between the corresponding values.

Under steady conditions, it might not make sense to add another sample, as there is another one that is almost identical or quite similar in the training sample set.

The operation of the neural network depends on certain values to be determined. For a particular system, the number of neurons in the input and output layer is known. The number of hidden layers and the number of neurons in those layers should therefore be determined. This is done through further experiments. The smaller the number of neurons in the hidden layer, the faster the network learns. On the other hand, it affects the precision of the network. In the case of heating substations, the number of hidden layers is predetermined in a range of {10;20}.

Another value is the parameter **β** in the adopted sigmoid activation function, which decides when the first neuron is activated. It is set at β=1.

The operation of the network is also influenced by the maximum number of training samples. The more samples there are, the better, but up to a certain threshold, as further increases no longer generate significant benefits. 100 training samples were predetermined for the control algorithm.

The length of the queue is determined by the number of controlled value samples, which in this case is the temperature of the water heated at the outflow of the heat exchanger, collected for testing in order to verify whether a steady state occurs. The smallest number of time steps is also determined, after which an attempt is made to add another training sample in relation to the previously added one.

Other parameters that might affect the operation of the network according to the invention are discussed below.

The threshold of change stability defines the increments for the controlled value over the sampling time, which determine whether the network state is considered steady. If the increments are higher than the change stability threshold, this means that the state is not yet steady. To calculate this threshold, the value of the controlled value is taken and divided by the given number of training samples. The threshold for the steady state of temperature was set at 0.1 K.

The network error tolerance constitutes the permissible error value for training the network with successive samples. The training process for the next new sample is iterative. The maximum number of iterations was assumed to be equal to the number of training samples. However, if the training error drops below the specified value, the network will stop training after less iterations. Typically, this should be the case, because otherwise this means that the network simply could not train properly.

The sample addition threshold determines the minimum difference between the current sample and the samples belonging to the training set, which must be exceeded if the current sample is to be added to the training set. If there are more samples than the predetermined number of training samples and the threshold has been exceeded, the sample closest to the current one will be removed. The distance between samples is determined in the Cartesian sense.

In addition, the operation of the controller program algorithm is controlled by the parameters discussed below.

The **size of hidden layer** determines the number of neurons in that layer. The more of them, the smaller the training error, but the slower the network operates. In the present embodiment tolerable error was predetermined to 0.001.

**Optimal number of training samples** means the number of correlated values of various signals such as heating medium supply and return temperature, heated medium supply and return temperature, and control valve stroke, which are stored in program memory. This applies to both static and dynamic networks. A large number of samples increases the precision of the network but may slow down its operation. There should be more samples for a dynamic network.

**The criterion of sample substitution** is understood as adding new samples to the memory and removing the most distant samples. As long as the number of training samples is less than assumed maximal number, then any new sample can be added. However, if the sample set is full, an existing one must be removed when adding another one. It is possible to remove the sample closest to the one being added, in terms of sum of squares of differences, with the greatest difference between the controlled and setpoint values and with the smallest difference. It is assumed that a sample corresponding to the greatest difference is removed for both static and dynamic networks. This is important because the network learns "positive" samples, i.e., those for which a controlled value that is closest to the setpoint has been reached. The more positive samples there are, the better the network operates. However, if the setpoint changes, the network has to learn many things again.

**Maximal number of iterations** is the number of subsequent calculations of network weights, after which the training process ends, even if the required precision is not yet achieved. However, it is important to remember that networks are trained when each new sample is added. In the embodiment, 100 iterations are assumed.

**Training error tolerance** defines the criterion for ending network training. A training error is understood as the square root of the sum of squares of differences between the expected output value and the actual value for all elements of the training set. The objective of the training is to minimize this error. When the error is less than the training error tolerance, training is completed even when the number of iterations is less than the maximum number of iterations. In the embodiment, a training error tolerance of 0.001 was assumed. After the end of the training process, this error is gradually reduced as the network learns more and more about the characteristics of the building with each additional training sample.

A back-propagation algorithm and a coupled gradient algorithm were used as training algorithms.

The back-propagation algorithm works quite well largely because the training process here is, in a way, continuous, with the addition of a new sample, the old ones are also used in training, and the network is learning constantly. In the controller, it is possible to select the algorithm depending on its effects by selecting the **identifier of the training algorithm.**

**Stability verification time** is a criterion for assessing the time after which values do not change above the set thresholds as a result of an disturbance. It is set in order to determine whether the system has reached its steady state. Its value in the embodiment is assumed to be a dozen or so seconds.

**Temperature steadiness threshold** is a criterion for determining whether the temperature is steady. If, for the duration of the **stability verification time,** the error being the sum of all the changes determined every given time interval - 0.1 s in the embodiment - is less than the **temperature steadiness threshold,** then the temperature is considered to be steady and the network is being trained. This applies to the supply and return temperature of the heating and heated medium and the setpoint.

**Flow steadiness threshold** is the value which, when exceeded during **the stability verification time** by the sum of all the flow rate changes of the heated medium stream, measured every given time interval - 0.1 s in this embodiment-determines that the flow is considered transient. Otherwise, the flow is considered to be steady and the static control network is trained using the recorded sample.

**Temperature change threshold** determines the value that, when exceeded, means a new state of the system. If the temperature changes from its last setpoint by a value exceeding the **temperature change threshold,** the static control network will recognize the new state of the system and respond to this new situation. In addition, the state of the system will be considered to be transient, and after an additional time - **setting time** - the controller will learn new samples for the static and dynamic networks. New temperature values are remembered as new steady values. This applies to the supply and return temperature of the heating and heated medium and the setpoint.

**Flow change threshold** determines a value that, when exceeded, means a new state of the system. If the flow changes from its last setpoint by a value reaching or exceeding the **flow change threshold** or that is higher than its last value, the static control network will recognize the new state of the system and respond to this new situation. In addition, the state of the system will be considered to be transient, and after an additional time - **setting time** - the controller will learn new samples for the static and dynamic networks. New flow values are remembered as new steady values. This applies to the flow rate of the heated medium.

**Setting time** specifies the time that must pass since the last recorded changes in the state of the system for any training attempt to take place. This is to eliminate situations when, after a change in the input value, e.g., the flow rate of the heated medium, the output from the system is not yet ready to change and the controller could consider that the state is steady and could start to learn the correlations that are wrong, because they do not concern the static state.

**Error tolerance** determines the error threshold. If it is not exceeded, networks do not learn. In the embodiment, the value of 0.5 K was assumed. Values of less than 0.1 K adversely affect the content of the training set because there are too many samples too close to the setpoint, where, in addition, the control valve stroke increment is very small and, as a result, the network has no room to learn more probable situations when the controlled value differs significantly from the setpoint and when the control valve stroke increment should be correspondingly larger.

The static control neural network learns the static relationship between the heating medium supply and return temperature, the heated medium return temperature, the heated medium flow rate, the control valve stroke, and the heated medium supply temperature as a controlled value. This is done when the values reach the state established after previous disturbances, which consists in checking whether changes over analyzed period of time exceed certain threshold values. This period is comparable to the time constant of the object of control; in this case, it is equal to a few seconds. When disturbance of an supply or return temperature of the heating medium, the return temperature of the heated medium, or the flow rate of the heated medium occurs, the network is to provide the stroke value at the moment when the controlled value reaches the setpoint. The most frequent disturbance is a change of the heated medium flow or a change of the setpoint. In the initial phase of control, until the network is well trained, static control is more general and there is a certain risk that it will not produce satisfactory results. During this time, the system's proper operation is ensured by the dynamic control network.

Algorithm followed by the static control network is as follows. In the next time step, it is checked whether value of disturbance exceeds the threshold value. If so, then the neural network calculates the control valve stroke value corresponding to the new values of disturbance values and the setpoint value, and the controller starts using these values. If the threshold values are not exceeded and the controlled value is determined, the current set of disturbance values from the controlled value and the stroke of the control valve is potentially another training sample. It is added to a set of training samples when it is not too close to an existing sample or when it is the first sample after the threshold values are exceeded. When the **maximal number of training samples** is exceeded, the addition of a sample must involve the removal of another sample. Depending on the operating scenario, you can remove the nearest, farthest, or random sample. Each sample is only six numbers, namely the values of the heating medium supply and return temperature, the heated medium return temperature, the heated medium flow rate, the control valve stroke, and the heated medium supply temperature as a controlled value.

If there are significant disturbances in the heat transfer process, then the control deviation increases rapidly, and the static control alone is not sufficient to ensure appropriate control quality. A dynamic control network was provided for such cases. If the value of the control deviation exceeds a certain assumed threshold, the dynamic control network gives the value of the control valve stroke that must be entered to eliminate the deviation. In this case, the network simultaneously learns the correlation between the heating medium supply and return temperature, the heated medium return temperature, the heated medium flow rate, the control valve stroke, the control valve stroke increment, and the controlled value increment.

In subsequent time step, the analysis consists in, first of all, determining whether the values of the heating medium supply and return temperature, the heated medium return temperature, the heated medium flow rate, the stroke of the control valve, and the heated medium supply temperature have reached the steady state in the given time period. If this is not the case, the dynamic control is not activated. Then, if this has not already happened in one of the previous time steps, the network is taught the correlation between the last applied value of the control valve stroke increment and the value of the controlled value increment that followed. If the difference between the controlled value and the setpoint value is greater than a certain threshold value, the network calculates the stroke increment of the control valve corresponding to this difference and the controller begins to use the new stroke value that was calculated.

It should be noted that control by changing the control valve stroke, which is a reaction to a control deviation, is imperfect and will always be accompanied by inertia, so there will always be a control deviation in the system. This action is only intended to alleviate static control imperfections, especially at the beginning of the system's operation, when the neural network is not yet able to sufficiently identify the controlled process. After some time, the network responsible for the static control should be able to learn the correct correlations and to give the stroke values of the control valve so that the controlled value is equal to the assumed setpoint tolerance.

A typical flow of control described above is as follows. If a disturbance occurs due to a change in the heating medium flow, which is the most typical disturbance, the static control system calculates a new control valve stroke value to ensure that the controlled value and setpoint are equal. After a certain period, new conditions are established in which the controlled value differs from the setpoint. At this point, the dynamic control system starts working. It estimates the control valve stroke increment to be used to achieve the required controlled value. However, if it turns out that another adjustment has to be made, then the dynamic system calculates the control valve stroke increment once again. This happens in subsequent moments, as long as the difference between the controlled value and the setpoint is not less than a certain, predetermined threshold value. No further system adjustment is needed after this condition is met. During such work, the system is sampled and both networks are trained with respect to appropriate correlations.

As in the case of static control, the dynamic control training set comprises a large number of samples. Each sample contains eight figures, which are the supply and return temperature of the heating and heating medium, the flow rate of the heating medium, the stroke of the control valve, the increase in the controlled value, and the increase in the stroke of the control valve. If the training set is overfilled, samples that are the furthest or least distant from the sample to be added will be removed from it, depending on which method produces better results.

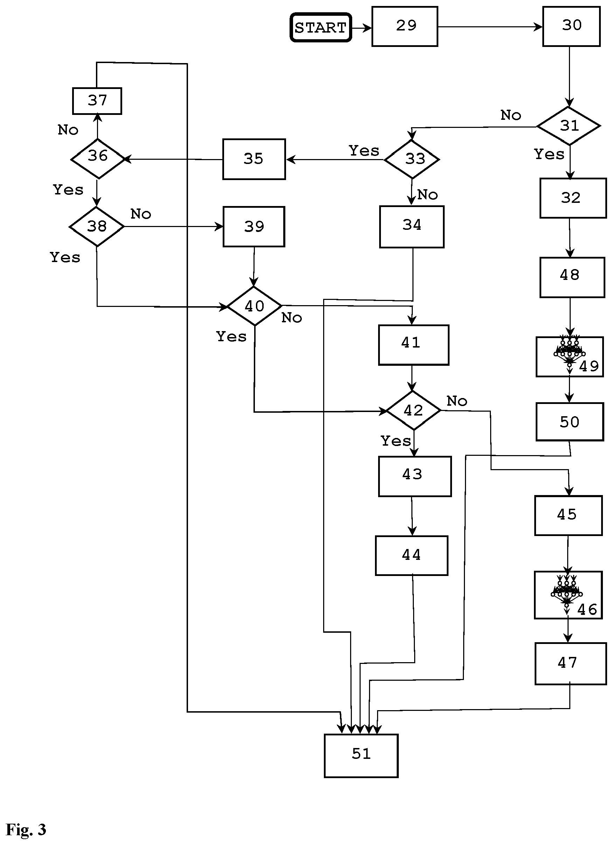

A flowchart of the method according to the invention in the embodiment is shown in Fig. 3. To simplify the description, this is explained by the example of a single control circuit, namely the supply temperature control system in a heating substation. Temperature control in a domestic hot water circuit is similar. heating substations often have at least two functions and the controller also has a second circuit in such case. It is usually a hot water circuit.

There is also a temperature circuit for the heating medium at the outflow of the substation. In this case, the neural controller controls three control circuits. This is a multifunctional neural controller. From the point of view of functional operation of the controller, the algorithms used in individual control circuits are comparable. The description of the neural controller algorithm is presented using the example of central heating supply temperature control.

Input values accepted in the acquisition step **29** are the thermal parameters of supply and return of the heating and heated mediums, the flow rate of the heated medium, the temperature setpoint value at the system supply, the position of the control valve, i.e., the control valve stroke, as well as the values from previous measured moments determining the controlled value, which is the temperature of the heated medium at the outflow from the substation and the previous control valve stroke value.

In the step of determining the difference 30, the difference between current values of heating medium supply temperature, heated medium return temperature, heated medium flow rate, temperature setpoint value at system supply, and the last of these values obtained in steady state conditions is determined. In the threshold testing step 31, the results obtained are compared with the values of the adopted thresholds defining the steady state. They may or may not be exceeded.

If the threshold value has been exceeded, the storage state **32** takes place, in which the current values are stored-heating medium supply temperature, heated medium return temperature, heated medium flow rate, temperature setpoint at the system supply, as the last ones for which the system was in the steady state.

Next, during the recording step **48,** information is recorded that no new samples have been added to the static and dynamic control neural networks.

In the static network control step **49,** the static control neural network calculates a new value of the control signal and stores the time when it was changed. In the step **50,** this signal is sent to the actuating device, which then changes the position of the control valve.

If the differences in the measured values calculated in step **30** do not exceed the assumed thresholds verified in step **31,** then step **33** is performed, where it is checked whether the time specified in the stability verification time has passed since the last control. If not, the unchanged value of the control signal is returned at step **34.** If the time since the last control exceeds the threshold, then in step **35** the differences between the readings from the last period are calculated, e.g., **10** s (the value depends on the dynamic properties of the control object), for the heating medium supply temperature, the heated medium return temperature, the heated medium flow rate, the heated medium supply temperature, and the system supply temperature setpoint.

Based on the results obtained, it is possible to determine whether the state of the system is steady. This is done in step **36** by comparing them with the values of the adopted thresholds. If they are not exceeded, the unchanged value of the control signal is returned at step **37.** If the state is transient, the information is sent to step **38,** where it is checked whether a dynamic sample has been added. If not, then in block **39,** a dynamic sample is added with values of heating medium supply temperature, heated medium return, heated medium flow rate, current value of heated medium supply temperature and control signal, and previous values of the last two signals indicating that dynamic sample was added.

Then the training of the dynamic control networks begins. Decision block **40** receives a signal from block **38** that a dynamic sample has been added and that the dynamic control network is being trained in block **39.** Block **40** sends information whether a static sample has been added. If not, then in block **41,** a static sample with values of heating medium supply temperature, heated medium return, heated medium flow rate, heated medium supply temperature, and control signal is added, and it is indicated that a static sample is added. At the same time, the static control network is trained in this block. If block **40** transfers information to block **42** that a static sample is added, step **42** is performed, in which difference between the controlled and setpoint temperature is checked and compared to the assumed threshold. If it is smaller than this threshold, block 43 stores the current value of the heating medium supply temperature, i.e., the controlled value and the control valve stroke, which are later used to calculate the differences of these values in subsequent moments of time.

At step **44,** the unchanged value of the control signal is returned. If the difference calculated at step **42** is greater than the assumed threshold, then at step **45** it is indicated that static and dynamic samples have not been added unless the controlled value is smaller than the setpoint, despite the complete stroke of the control valve or if the controlled value is larger than the setpoint despite the control valve being fully closed. This means that there has been some kind of failure in the heating system which does not depend on the operation of the control system.

In this step, the dynamic control network is trained **46.** The new value of the control signal is calculated, and the time of the last control is stored. The information is transmitted to block **47,** which returns a new control signal value. All output signals are transmitted continuously to block **51,** where the control signal of a given control circuit is finally selected. Similarly, control signals in other control circuits are determined.

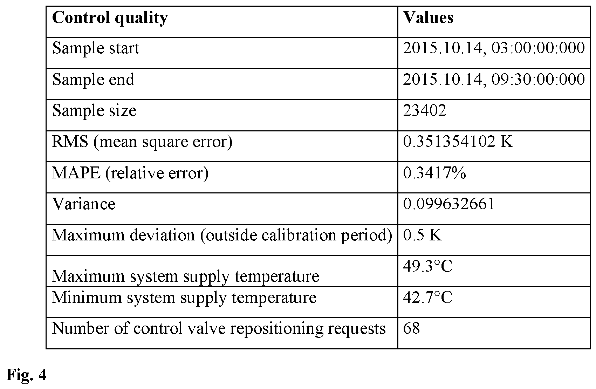

The neural controller according to the invention was tested in actual conditions-the parameters obtained are illustrated in the table shown in Fig. 4. The quality of control was assessed by calculating the following indicators:
- RMS mean square error;
- MAPE relative error;
- variance and standard deviation;
- control deviation.

The control deviation is a measure of the actual error that occurred in the control system. Therefore, the maximum deviation and the maximum and minimum value of the controlled value were calculated. Another important issue is the operation of the control valve, which is the most common cause of failures in this type of control system. Therefore, the number of requests to change the position of the control valve (resulting from the operation of the control algorithm) during the period being analysed was determined in order to assess this phenomenon. A good indicator for the operation of the control valve is also the distance the control valve travels over a given period of time. These indicators were used for the final evaluation of the quality of control of the system containing the neural controller.

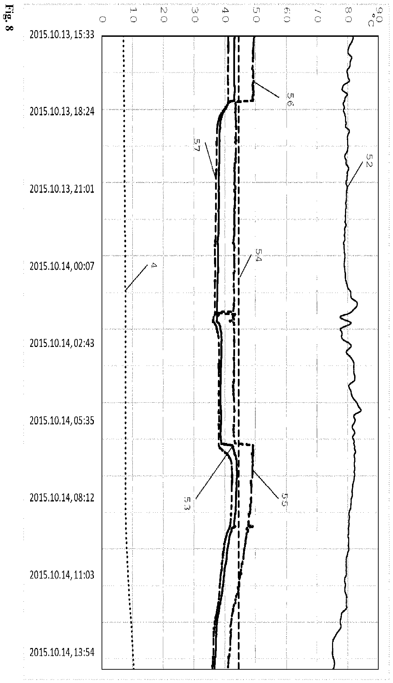

The course of the two-day period for the control process in an actual heating substation, using a neural controller according to the invention, is illustrated in Fig. 8, 9 and 10. The assumed period of time drawn on the abscissa was due to the possibility of maintaining the largest possible scale, which ensured appropriate readability of these charts.

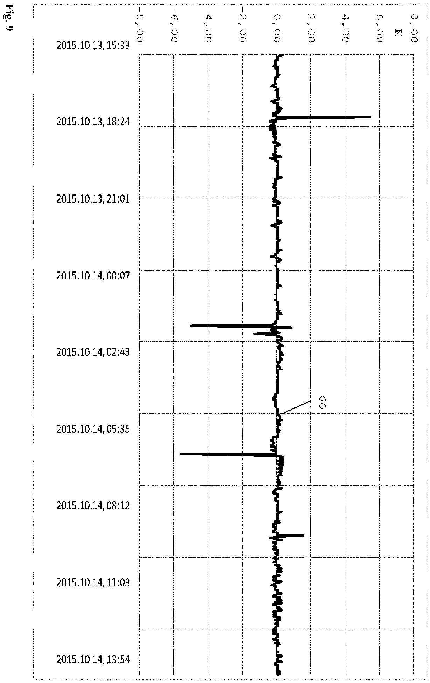

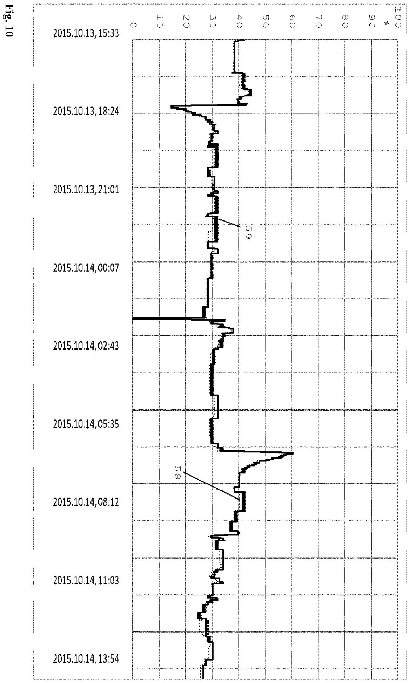

Fig. 8 presents the flows of important parameters in the heating substation, namely: supply temperature **52** and return temperature **53** and the maximum permissible temperature at the outflow from the substation **54** for the heating medium, temperature of the heated medium at the inlet to the substation **57** and at the supply to the system **55** and the setpoint for the heated medium **56** and the outside air temperature **4.** Fig. 9 presents control deviations **60,** while Fig. 10 illustrates the required position of the control valve, actual **58** and measured **59.**

It can be said that the quality of the control is practically constant and very good throughout the period of operation. The attached drawings, covering the period of any two days, show graphs of the flow of selected values of control systems used for their evaluation. Similar control processes have taken place over the entire period of operation of the controller.

For comparison, Fig. 5, Fig. 6, and Fig. 7 present the typical flows of parameters obtained from measurements in actual heating substations, where existing control system solutions were installed. The application of the invention ensures the required quality of control and, moreover, allows for significant reduction of heat consumption by as much as 30% compared to the existing solutions, while providing the required thermal comfort.

The controller can be equipped with additional functional blocks, which have been omitted for clarity of description as they are not the object of this patent application. However, they have a significant impact on the quality of control and reliability. The more important ones include so-called detections. The most important of these are:
- inaction detection;
- wrong direction detection;
- instability detection.

It may happen that the neural controller does not work very well right after switching on. This may be the case if it is not yet sufficiently trained and there are not enough samples collected. For example, despite an increasing control error, there is no controller action, or there is an inverse action, or long-term oscillations occur. Such a phenomenon is immediately detected and then the appropriate procedure is activated. All detections work once. During this time, the neural network is switched off, and then, once the flows are established, it starts operating again. The idea is that it is the network that controls the position of the control valve, and the detections are to detect and prevent anomalies resulting from the failure of the network. In a way, they act as a supporting controller. The difference, however, is that instead of using an additional controller, an algorithm for finding the operating point based on averaging previous points was used, which is ideal enough to bring the system to the set conditions and help the network to learn the appropriate operating point. It works much better than the controller, which has been repeatedly acknowledged during tests in actual systems.

Neural networks are particularly useful in adaptive control systems with time-varying properties. They are also indicated in cases where it is difficult to determine the exact algorithm of operation or to describe the process in detail. Such situations occur in heating systems as they have non-linear properties with a very wide range of parameter variability.

The neural network can perform predictions of a future value of the control output for different input values. The network finds control values, which ensure the equality of controlled and setpoint values, simultaneously with training the network using the previous values of the control signal and measurement signals. The network output is treated as one of the weights and is taken into account and modified.

It is impossible to achieve good quality control of non-linear processes using traditional solutions.

The operation of the neural network used in control systems is different from that of traditional controllers. The output value in both cases is a control signal fed into the actuating device, which provides the setpoint of the controlled value. On the other hand, all values occurring in a given process are taken into account at the **LV** controller input.

The task of the network is to search for correlations between the input and output values. During the operation of the system, the network is continuously trained, which consists in adding a next set of correctly paired values to the memory, providing the required value of the controlled value. If the neural network is properly trained, the system will return to its equilibrium state after any disturbance that has occurred, after a single switch of the control valve. A characteristic feature of neural networks is the improvement of their effects over time. This means that the adaptive action results in an optimal control of the process. The result is the energy savings achieved during the service life of the building. This is directly related to the costs incurred by the users of the facilities concerned. An unquestionable advantage of neural networks is their adaptation to changing working conditions. If, for example, the purpose of the building is changed, the network will soon learn new conditions without any additional external action.

According to the invention, the heating substation can be equipped with additional sensors providing measurement signals representing wind and sunshine.

The state-of-the-art lacked devices equipped with artificial intelligence, using neural networks, used to control heat processes in heat exchanger heaters supplied from centralized sources. The invention fills that gap.

On the basis of the conducted tests, it can be concluded that the obtained results are fully satisfactory for the analysed heat processes, which concern the parameters of central heating systems and domestic hot water. It is very beneficial for the operation of the invention, as there is no oscillation and there are no frequent changes in the position of the control valve. This ensures the durability and reliability of the equipment and, what is particularly important, extends the service life of the actuators, as the most common cause of failure of a control system of a heating substation is the failure of the actuating devices.

The invention used in buildings with thermal efficiency improvements provides quick identification of the site and adjustment of thermal parameters of the system to the current needs of the building. The implementation of this system on a wider scale will contribute to a significant reduction in the emission of pollutants into the atmosphere, which is a particular challenge in the present times. The invention should be widely used in residential buildings, office buildings, schools, public utility buildings, industrial facilities, and heat control systems in industrial processes.

## Claims

1. A method of control by means of a controller, of a heating substation including a heat exchanger (13, 14) supplied with thermal energy from an external heat source (8) by means of water constituting a heating medium in a primary circuit and a heated medium in a secondary circuit, wherein
heat supply is controlled by means of an actuating device (2),
containing a control valve and an actuator connected thereto, which changes a flow rate of the heating medium, and controlled by a control signal (**19**, **18**), determined on a base of signals from sensors representing a supply temperature (**25**) of the heating medium and a
return temperature (**22**, **7**) of the heating medium as well as a temperature (**16**, **23**) at the substation inflow of the heated medium, and supply temperature (**6**, **5**) of the heated medium,
a flow rate (**21**) of the heated medium and
a temperature setpoint at the system supply and the
position of the control valve of the actuating device, **characterized in that**
value of the control signal is determined with a neural regulator (**LV**), comprising a system of two neural networks, comprising a static control neural network (**49**) and a dynamic control neural network (**46**), wherein
the static control neural network (**49**), is used to determine the change in the value of the control signal of the actuating device, in subsequent time steps, and if the change is found to be greater than the predefined value, a transient state is detected (**31**) and
the control signal change over time (**19**, **18**) is determined by a dynamic control neural network (**46**).

2. Method according to claim 1, **characterized in that** during control, values of signals in the control system and values of control signal are measured and recorded and samples thereof are used to train the static control neural network.

3. Method according to claim 1 or 2, **characterized in that**, additionally, on the basis of the determined values of the control signal (**19**, **18**), there are carried out error detections of the static control neural network (**49**) and the dynamic control neural network (**46**), including inactivity, erroneous direction of control, instability, and if an error is detected, control without the use of neural networks is carried out using the stored values of the control signal.

4. Method according to claim 2 or 3, **characterized in that** the training of a static control neural network (**49**) and/or dynamic control neural network (**46**) is carried out until a predefined maximum number of training iterations is exceeded.

5. Method according to claim 2 or 3 or 4, **characterized in that** the training of a static control neural network (**49**) and/or a dynamic control neural network (**46**) is carried out until control error is below a predefined training error value.

6. The method according to claim 2 or 3 or 4 or 5, **characterized in that**, the training of a static control neural network (**49**) and/or a dynamic control neural network (**46**) is carried out on a sample set limited to a predefined maximum number of training samples and when this is reached, one of the least divergent samples is removed from the set before the next one is added.

7. Regulator (**LV**) adapted to generate a control signal (**19**, **18**) of an actuating device of a heating substation including a static control neural network (**49**) and a dynamic control neural network (**46**), adapted to receive measurement signals from
a supply temperature sensor (**25**) of a heating medium,
a return temperature sensor (**22**, **7**) of the heating medium,
a temperature sensor (**16**, **23**) of a heated medium at the inflow to the heating substation,
a supply temperature sensor (**6**, **5**) of the heated medium,
a heated medium flow sensor (**21**),
a position sensor of the actuating device control valve (**20**, **17**),
and to receive a temperature setpoint at the system supply (**6**, **5**), determined on the basis of set control algorithms, adapted to the implementation of the method as specified in any of the claims from 1 to 6.

8. A computer program product containing a sequence of instructions which, after being uploaded to a digital system controller of a heating substation adapted
to receive measurement signals from
a supply temperature sensor (**25**) of the heating medium,
a return temperature sensor (**22**, **7**) of the heating medium,
the supply temperature sensor (**5**, **6**) of the heated medium,
a temperature sensor (**16**, **23**) for the heated medium at the inflow to the substation,
a heated medium flow sensor (**21**),
a position sensor of the actuating device control valve (**20**, **17**), and
to determine a setpoint value of the controlled value at the supply,
causes execution of the method according to any of the claims 1 to 6.

9. A heating substation comprising a heat exchanger (**13**, **14**) supplied with a thermal energy from an external heat source (**8**) via water as a primary and secondary heating medium, containing an actuating device (**2**) having an actuator and a connected control valve to change the flow rate of the heating medium via the heat exchanger (**14**, **13**), controlled by a control signal (**19**, **18**) determined by the controller from sensor signals representing
supply temperature (**25**) of the heating medium and return temperature (**22**, **7**) of the heating medium and inflow temperature (**16**, **23**) of the heated medium, and supply temperature (**6**, **5**) of the heated medium,
heated medium flow rate (**21**) and
the temperature setpoint at the system supply (**6**, **5**) and the position of the control valve (**20**, **17**),
**characterised in that**
the controller includes a neural regulator (**LV**) as defined in claim 7.

10. Heating substation according to claim 9, **characterized in that** it includes a domestic hot water heat exchanger (**13**) and a central heating heat exchanger (**14**) supplied with heating medium via two independent actuating devices (**2**) changing the flow rate of the heating medium through the heat exchangers (**14**, **13**), while the neural (**LV**) regulator is adapted to the execution of the method as defined in any of the claims from 1 to 6 for control of the temperature set at the supply of domestic heat water and central heating system.
